(19) **Europäisches Patentamt / European Patent Office / Office européen des brevets**

(11) **EP 3 062 450 B1**

(12) **EUROPEAN PATENT SPECIFICATION**

(45) Date of publication and mention
of the grant of the patent:
**03.04.2019 Bulletin 2019/14**

(51) Int Cl.:
*H04B 7/08* (2006.01)   *H04N 5/44* (2011.01)
*H04L 1/00* (2006.01)

(21) Application number: **14855665.7**

(22) Date of filing: **10.10.2014**

(86) International application number:
**PCT/JP2014/077173**

(87) International publication number:
**WO 2015/060145 (30.04.2015 Gazette 2015/17)**

(54) **RECEPTION APPARATUS, RECEPTION METHOD, AND PROGRAM**

EMPFANGSVORRICHTUNG, EMPFANGSVERFAHREN UND PROGRAMM

APPAREIL ET PROCÉDÉ DE RÉCEPTION, ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2013 JP 2013220142**

(43) Date of publication of application:
**31.08.2016 Bulletin 2016/35**

(73) Proprietor: **Sony Corporation
Tokyo 108-0075 (JP)**

(72) Inventors:
• **YOSHIMOCHI Naoki
Tokyo 108-0075 (JP)**
• **MARUYAMA Hirofumi
Tokyo 108-0075 (JP)**
• **OKADA Satoshi
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(56) References cited:
EP-A1- 1 772 982      WO-A1-2006/011424
JP-A- 2005 333 455    JP-A- 2005 333 455
JP-A- 2007 180 875    JP-A- 2009 044 345
US-A1- 2009 044 074   US-A1- 2013 117 624

• DVB ORGANIZATION:
"tm_h5313_dEN_302755v010302a.doc", DVB,
DIGITAL VIDEO BROADCASTING, C/O EBU - 17A
ANCIENNE ROUTE - CH-1218 GRAND
SACONNEX, GENEVA - SWITZERLAND, 18
October 2013 (2013-10-18), XP017842202,

EP 3 062 450 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present technology relates to a reception apparatus, a reception method, and a program. Specifically, the present technology relates to a reception apparatus, a reception method, and a program that are suitable to improve performance in reception using diversity.

Background Art

From Japanese patent application Laid-open No. 2013-135270, it is known that some of image display devices with a display, such as television sets and mobile terminal apparatuses, are equipped with a reception apparatus including a plurality of antennas.

There is a technology to achieve improvement in communication quality and reliability by preferentially using a signal of an antenna having a good radio wave condition, among identical signals received by a plurality of antennas, or by synthesizing received signals and removing noise. Such a technology is called diversity.

From European patent application publication EP 1 772 982 A1, a diversity receiving apparatus is known that can arbitrarily determine the master branch which is the reference to synchronize the output timing among the symbols of the signals received by a plurality of branches depending on the receiving condition.

From DVB ORGANIZATION document published with the reference: DVB, DIGITAL VIDEO BROADCASTING, C/O EBU - 17A ANCIENNE ROUTE - CH-1218 GRAND SACONNEX, GENEVA - SWITZERLAND, 18 October 2013 (2013-10-18), XP017842202, a second generation baseline transmission system for digital terrestrial television broadcasting is known that specifies the channel coding/modulation system intended for digital television services and generic data streams.

From US patent application publication US 2013/117624 A1, a data flow control in a television receiver is known that controls the output of the frequency deinterleaver (FDI) and the time deinterleaver (TDI) to prioritize processing control information having transmission parameters needed for processing data, thereby facilitating use of one FEC decoder.

From Japanese patent application publication JP 2005 333455 A, a method and an apparatus is known which obtains a complex correlation between a receiving signal and a synthetic signal, performs a smoothing processing by using a forgetting factor set to 0.9, calculates a square sum (real number) from two smoothed complex correlation values, and divides the smoothed complex correlation value by the calculated square sum. The method further updates and outputs an amplitude correction coefficient to a complex multiplier.

Patent application publication US 2009/044074 A1 discloses an OFDM receiving apparatus comprising N demodulation units associated with N antennas, a buffer unit buffering the demodulated data, a synthesising unit combining the buffered data, and a error correction unit processing the combined data.

Summary of Invention

Problem to be solved by the Invention

The diversity is used when a signal is received mainly by a mobile object. For example, in a situation where a mobile terminal apparatus is being carried and moved, a reception position of a signal is changed from moment to moment. Thus, reception sensitivity is also easy to change.

For example, in the case where signals are received and processed by two antennas, if signals are acquired from both the antennas within a predetermined time period, those signals are synthesized and output. In the case where a signal from one of the antennas delays, however, according to the delay, the synthesis of the signals also delays. When such delay occurs, there is a possibility that an output timing of the synthesized signal is changed steeply.

In a part that processes the synthesized signal, it is desirable that the synthesized signal be supplied at regular intervals. For example, if the intervals are shortened suddenly, the processing may not keep up with the intervals, and if the intervals are prolonged, videos to be supplied to a user and the like may be interrupted. In this regard, there is a demand to supply a synthesized signal at regular intervals and prevent a steep change in supply intervals from occurring.

The present technology has been made in view of such circumstances and aims to improve performance in receiving and processing signals by a plurality of antennas.

Means for solving the Problem

According to a first aspect, the invention provides a reception apparatus in accordance with independent claim 1. According to a second aspect, the invention provides a reception method in accordance with independent claim 5. According to a third aspect, the invention provides a computer-readable program causes a computer to execute processing in accordance with independent claim 6.

Further aspects of the invention are set forth in the dependent claims, the drawings and the following description.

Effects of the Invention

According to an aspect of the present technology, it is possible to improve performance in receiving and processing signals by a plurality of antennas.

It should be noted that the effects described herein are not necessarily limited, and any of the effects described in this disclosure may be produced.

Brief Description of Drawings

Fig. 1 is a diagram showing an exemplary configuration of a reception apparatus.
Fig. 2 is a diagram for describing an output timing of a synthesis symbol.
Fig. 3 is a diagram for describing an output timing of a synthesis symbol.
Fig. 4 is a diagram for describing an output timing of a synthesis symbol.
Fig. 5 is a diagram showing a configuration of an embodiment of the reception apparatus to which the present technology is applied.
Fig. 6 is a diagram showing a configuration of a smoothing unit.
Fig. 7 is a diagram for describing an output timing of a synthesis symbol.
Fig. 8 is a flowchart for describing control of the output timing of the synthesis symbol.
Fig. 9 is a flowchart for describing control of the output timing of the synthesis symbol.
Fig. 10 is a diagram for describing a recording medium. Mode(s) for Carrying Out the Invention

Hereinafter, a mode for carrying out the present technology (hereinafter, called embodiment) will be described.

It should be noted that description is given in the following order.

1. Regarding Diversity
2. Configuration of Reception Apparatus
3. Configuration of Smoothing Unit
4. Processing of Smoothing Unit
5. Regarding Recording Medium

<Regarding Diversity>

The present technology described below can be applied to a technology called diversity, and thus description will be given on diversity as an example. The diversity is a technology to achieve improvement in communication quality and reliability by preferentially using a signal of an antenna having a good radio wave condition, among identical signals received by a plurality of antennas, or by synthesizing received signals and removing noise. In the following description, a case where identical signals received by a plurality of antennas are synthesized will be described as an example.

Further, in order to clarify a difference between a reception apparatus to which the present technology is applied and a general reception apparatus, a general reception apparatus and an operation thereof will be described first, and the reception apparatus to which the present technology is applied will be described next.

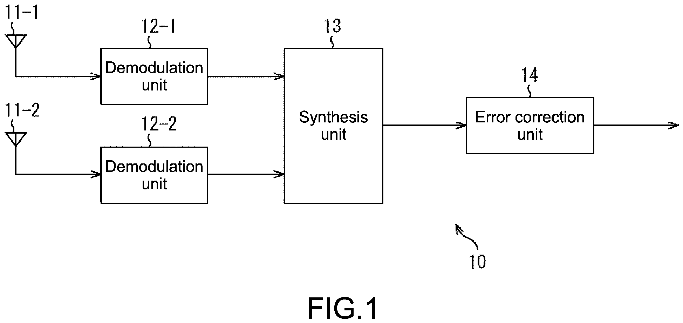

Fig. 1 is a diagram showing a configuration of a reception apparatus 10 to which the technology of diversity is applied. The reception apparatus 10 includes an antenna 11-1, an antenna 11-2, a demodulation unit 12-1, a demodulation unit 12-2, a synthesis unit 13, and an error correction unit 14. Here, description will be continued with an example of the reception apparatus 10 including the two antennas 11-1 and 11-2, but the present technology can also be applied to a reception apparatus including two or more antennas.

In the case where the antenna 11-1 and the antenna 11-2 are not necessarily distinguished individually, the antenna 11-1 and the antenna 11-2 are simply described as an antenna 11. The same holds true for the other portions.

A signal received by the antenna 11-1 is supplied to the demodulation unit 12-1. A signal received by the antenna 11-2 is supplied to the demodulation unit 12-2. The signal received by the antenna 11 is hereinafter described as a branch appropriately.

Each of the demodulation unit 12-1 and the demodulation unit 12-2 demodulates the supplied branch. The demodulation unit 12 performs demodulation based on OFDM (Orthogonal Frequency Division Multiplexing), for example. Further, the demodulation unit 12 may be configured to perform demodulation of broadcasting standards using the OFDM.

A demodulation result at a predetermined timing is described as a reception symbol. A reception symbol from the demodulation unit 12-1 and a reception symbol from the demodulation unit 12-2 are each supplied to the synthesis unit 13.

The synthesis unit 13 synthesizes the two supplied reception symbols and supplies a synthesis result to the error correction unit 14. The output from the synthesis unit 13 is described as a synthesis symbol. The error correction unit 14 performs error correction on the supplied synthesis symbol on the basis of a predetermined algorithm and outputs a result to a processing unit in a subsequent stage (not shown).

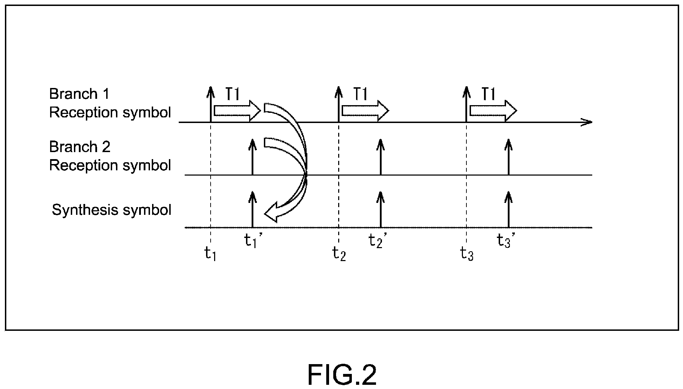

With reference to Fig. 2, a synthesis operation in the synthesis unit 13 will be described. Here, the signal received by the antenna 11-1 is described as a branch 1, and the signal received by the antenna 11-2 is described as a branch 2.

The upper part of Fig. 2 represents an arrival time of the reception symbol of the branch 1, the middle part thereof represents an arrival time of the reception symbol of the branch 2, and the lower part thereof represents an output time of the synthesis symbol. In the figure, the horizontal axis represents time, and a time at which an up-pointing arrow is located represents a time at which the symbol arrives.

A predetermined time period from the arrival time of the branch 1 is a search range for the branch 2. In the upper part of Fig. 2, a transverse thick arrow represents the search range. For example, in the case where time t1 is an arrival time of the reception symbol of the branch 1, a predetermined time period after the time t1 is assumed to be the search range. Here, the time period of the search range is denoted by time period T1.

The time period of the search range is provided as a fixed time limit for waiting for the arrival of a reception symbol of a branch that is delayed in arriving, and is thus described as a search time limit appropriately.

When a reception symbol is acquired within the search time limit, the reception symbol is assumed as a synthesis target in the synthesis unit 13. For example, in the case where the reception symbol of the branch 1 is acquired at the time t1, and the reception symbol of the branch 2 is acquired at time t1' within the search time limit from the time t1, those two reception symbols are synthesized, and a synthesis symbol is generated. The reception symbols of the two branches are supplied to the synthesis unit 13, and thus the synthesis is started and the output of the synthesis symbol is started.

Similarly, when the reception symbol of the branch 1 is acquired at time t2, and the reception symbol of the branch 2 is acquired at time t2' within the search time limit, a synthesis symbol is output by the synthesis unit 13. Similarly, when the reception symbol of the branch 1 is acquired at time t3, and the reception symbol of the branch 2 is acquired at time t3' within the search time limit, a synthesis symbol is output by the synthesis unit 13.

For example, in the case where a reception position is not changed and reception sensitivity is constant, intervals at which the reception symbol of the branch 1 is acquired are constant. Further, intervals at which the reception symbol of the branch 2 is acquired are also constant. In such a case, intervals of an output timing of the synthesis symbol are also constant.

In such a manner, on the basis of the arrival time of the branch 1, the reception symbol of the branch 2 is observed, and the synthesis is performed. As shown in Fig. 2, in the case where the reception symbol of the branch 1 and the reception symbol of the branch 2 are normally received, the synthesis symbol is generated and output. However, it is also thought that the reception symbol of any one of the two branches cannot be acquired.

Diversity is used when a signal is received mainly by a mobile object. For example, in the case where the reception apparatus is being carried and moved, a reception position of a signal is changed from moment to moment. Thus, reception sensitivity is also easy to change, and it is thought that the reception symbol of the branch 1 or the reception symbol of the branch 2 cannot be acquired.

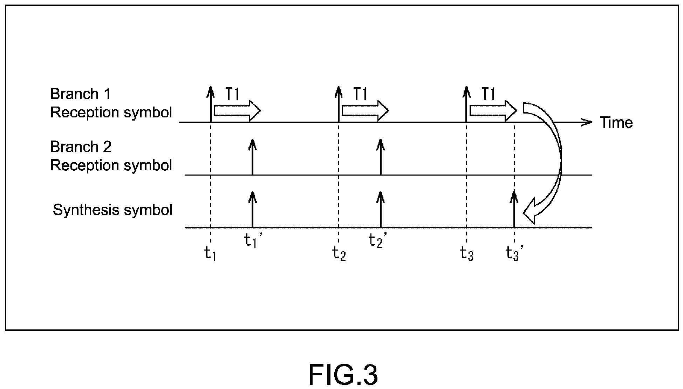

This will be described with reference to Fig. 3. As in Fig. 2, the upper part of Fig. 3 represents an arrival time of the reception symbol of the branch 1 and a search range, the middle part thereof represents an arrival time of the reception symbol of the branch 2, and the lower part thereof represents an output timing of the synthesis symbol.

In the example shown in Fig. 3, the reception symbol of the branch 1 is acquired at time t1 and time t2, and the reception symbol of the branch 2 is acquired at time t1' and time t2'. This is similar to the case shown in Fig. 2.

At time t3, the reception symbol of the branch 1 is acquired, but within the search time limit subsequent thereto, the reception symbol of the branch 2 is not acquired. In the case where the reception symbol of the branch 2 is not acquired within the search time limit, and the search time limit T1 has elapsed, the acquired reception symbol of the branch 1 is not synthesized by the synthesis unit 13 at time t3', and the reception symbol of the branch 1 is output.

In such a manner, in the case where the reception symbol of the branch 2 has disappeared, the synthesis in the synthesis unit 13 is not performed, and the reception symbol of the branch 1 is output. In such a case, diversity gain cannot be obtained.

In such a manner, even in the configuration in which a plurality of branches are acquired and synthesized, all of the branches are not always acquired. In the case where all of the branches are not acquired, there is a possibility that effects of the gain by the diversity are not sufficiently obtained, or subsequent processing cannot be normally performed.

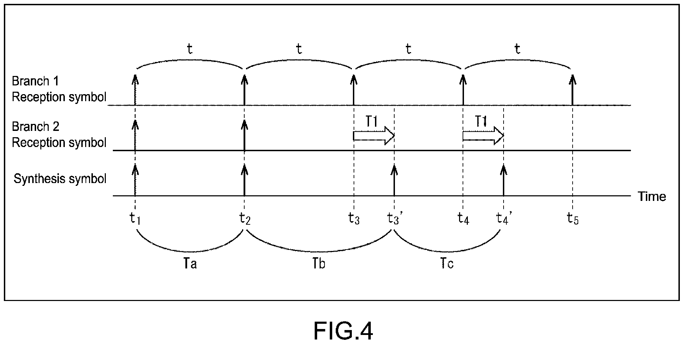

Further, a possibility that the intervals of output of the synthesis symbol from the synthesis unit 13 are changed will be described with reference to Fig. 4. As in Fig. 2 and 3, the upper part of Fig. 4 represents an arrival time of the reception symbol of the branch 1 and a search range, the middle part thereof represents an arrival time of the reception symbol of the branch 2, and the lower part thereof represents an output timing of the synthesis symbol.

In Fig. 4, it is assumed that the reception symbol of the branch 1 is acquired at regular intervals. This interval is described as interval t. The reception symbol of the branch 1 is acquired at time t1, time t2, time t3, time t4, and time t5. The intervals between the time t1 and the time t2, between the time t2 and the time t3, between the time t3 and the time t4, and between the time t4 and the time t5 are each the interval t.

When the reception symbol of the branch 2 is acquired at the time t1, the reception symbols of the branch 1 and the branch 2 are supplied to the synthesis unit 13 and synthesized. A synthesis symbol is then output from the synthesis unit 13 at the time t1.

Similarly, when the reception symbol of the branch 2 is acquired at the time t2, the reception symbols of the branch 1 and the branch 2 are supplied to the synthesis unit 13 and synthesized. A synthesis symbol is then output from the synthesis unit 13 at the time t2.

At the time points of the time t1 and the time t2, a reception status is good, and the reception symbol of the branch 1 and the reception symbol of the branch 2 are received, synthesized, and output at substantially the same time. In such a case, an output interval of the synthesis symbol is an interval Ta. The interval Ta is the interval t.

At the time t3, in the case where the reception symbol of the branch 1 is acquired but the reception symbol of the branch 2 is not acquired, whether the reception symbol of the branch 2 is acquired or not is monitored in a time period T1 from the time t3 as a reference time. When the reception symbol of the branch 2 is acquired at time t3' during the time period T1, at the time t3', the reception symbols are synthesized by the synthesis unit 13 to be output.

In this case, the synthesis symbol is output at the time t2 and then output at the time t3'. This interval is denoted as an interval Tb. The interval Tb has a value obtained by adding the time period T1 as the search time limit to the interval t, i.e., interval Tb = interval t + interval T1.

At the time t4, in the case where the reception symbol of the branch 1 is acquired but the reception symbol of the branch 2 is not acquired, whether the reception symbol of the branch 2 is acquired or not is monitored in the time period T1 from the time t4 as a reference time. When the reception symbol of the branch 2 is acquired at time t4' during the time period T1, at the time t4', the reception symbols are synthesized by the synthesis unit 13 to be output.

In this case, the synthesis symbol is output at the time t3' and then output at the time t4'. This interval is denoted as an interval Tc. With reference to Fig. 4, a time period from the time t3' to the time t4 is a time period obtained by subtracting the time period T1 from the interval t, and a time period from the time t4 to the time t4' is the time period T1. The interval Tc from the time t3' to the time t4' is a time period obtained by adding a time period from the time t3' to the time t4 and a time period from the time t4 to the time t4'.

Therefore, a value obtained by adding (interval t - time period T1) and the time period T1 is a time period of the interval Tc, and thus the interval Tc is the interval t, i.e., interval Tc = interval t.

In such a manner, the output timing of the synthesis symbol changes depending on a timing at which the reception symbols are acquired. Here, the output timing of the synthesis symbol, in this case, an output interval will be described with reference to Fig. 4 again.

In the example shown in Fig. 4, the output intervals of the synthesis symbol are the interval Ta, the interval Tb, and the interval Tc. When those intervals are expressed using the interval t and the time period T1 as described above, those intervals are as follows.

Interval t, Interval t + Time period T1, Interval t

In such a manner, there is a possibility that the output timing of the synthesis symbol changes depending on a timing at which the reception symbols are acquired, and is not constant.

Incidentally, in the clause C.1.1 of "ETSI EN 302 755 v1.3.1" or "DVB-T2 Implementation Guidelines Blue Book A133", the DVB-T2 (Digital Video Broadcasting-Terrestrial 2) standard as the second-generation European terrestrial digital broadcasting standard is described. The DVB-T2 standard defines an RBM (Receiver Buffer Model) and provides the following request: "a reception apparatus conforming to the DVB-T2 standard makes constant an information transmission rate to error correction".

Further, in "DVB-C2 Implementation Guidelines ETSI TS 102 991 v1.2.1", the DVB-C2 (Digital Video Broadcasting-Cable 2) standard as the second-generation European cable digital broadcasting standard is described. As in the DVB-C2 standard, in the Implementation Guidelines, making an information transmission rate to error correction constant is requested.

In the case where the reception apparatus 10 described above is configured to satisfy the DVB-T2 standard or the DVB-C2 standard, it is desirable that the intervals at which the synthesis symbol is output from the synthesis unit 13 to the error correction unit 14 be constant. Also in the case where the reception apparatus 10 is configured to satisfy standards other than the DVB-T2 standard and the DVB-C2 standard, it is desirable that the intervals at which the synthesis symbol is output from the synthesis unit 13 to the error correction unit 14 be constant.

However, as described above, in the case where there is a plurality of branches, and reception symbols of one or more branches of the plurality of branches delay or disappear, output intervals of a synthesis symbol may change, and a situation where the regulations described above are not satisfied may occur.

Further, in a digital broadcasting reception apparatus, when a transmission timing of the synthesis symbol does not have regular intervals and when a phenomenon occurs in which the information transmission rate to the error correction unit 14 is changed, the following cases may occur.

1. A possibility that jitter occurs in the transmission timing of TS (transport stream) in digital television demodulation

2. Difficulty in design cost and restrictions, such as achievement of high speed in processing of the error correction unit 14, or indispensable mounting of a buffer in the error correction unit 14

In this regard, description will be given on a reception apparatus having a configuration and an operation as described below, which makes the output intervals of the synthesis symbol substantially constant and prevents a situation where the regulations described above are not satisfied.

<Configuration of Reception Apparatus>

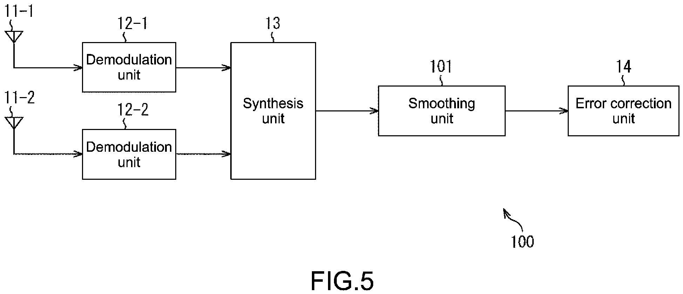

Fig. 5 is a diagram showing a configuration example of a reception apparatus 100 having a configuration in which the output intervals of the synthesis symbol become constant.

The reception apparatus 100 shown in Fig. 5 has a configuration in which a smoothing unit 101 is added to the configuration of the reception apparatus 10 shown in Fig. 1. In the reception apparatus 100 shown in Fig. 5, portions having the same functions as the reception apparatus 10 shown in Fig. 1 are denoted by the same reference symbols and description thereof will be appropriately omitted.

The smoothing unit 101 supplies the synthesis symbol, which is supplied from the synthesis unit 13, to the error correction unit 14. When the smoothing unit 101 supplies the synthesis symbol to the error correction unit 14, such control that supply intervals thereof become constant is performed.

<Configuration of Smoothing Unit>

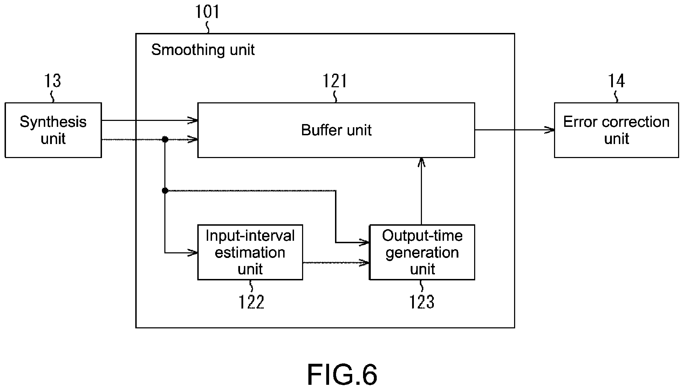

Fig. 6 is a diagram showing an example of an internal configuration of the smoothing unit 101. The smoothing unit 101 includes a buffer unit 121, an input-interval estimation unit 122, and an output-time generation unit 123. The buffer unit 121 holds the synthesis symbol from the synthesis unit 13. In order to output the synthesis symbol at regular intervals, the buffer unit 121 temporarily holds the synthesis symbol, adjusts the output intervals (transmission rate) so as to fall within a certain range, and perform output.

The input-interval estimation unit 122 estimates an interval at which the synthesis symbol is input. A symbol start flag is supplied from the synthesis unit 13 to the input-interval estimation unit 122. The symbol start flag enables detection of a timing at which the synthesis symbol is supplied to the input buffer unit 121.

Description will be continued assuming that the symbol start flag is a flag that is turned on when the synthesis symbol is output from the synthesis unit 13 and is turned off in other cases, but the symbol start flag may be a flag that is turned off when the synthesis symbol is output and is turned on in other cases. Further, the flag is described, but the flag may not be used. Data for merely notifying the output of the synthesis symbol may suffice.

The input-interval estimation unit 122 performs filtering on the interval of the input synthesis symbol by using a factor a (<1) and obtains an interval of the input symbol. The obtained interval of the input symbol (hereinafter, appropriately described as estimated input interval) is supplied to the output-time generation unit 123.

The output-time generation unit 123 generates a time at which the synthesis symbol held in the buffer unit 121 is output. The output-time generation unit 123 receives the symbol start flag from the synthesis unit 13, and the estimated input interval from the input-interval estimation unit 122.

The output-time generation unit 123 adds the estimated input interval, which is estimated in the input-interval estimation unit 122, to the time at which the synthesis symbol is output from the smoothing unit 101, to obtain an estimated output time of the next symbol.

```
Estimated output time = Last symbol output time + Estimated input
interval
```

Additionally, the output-time generation unit 123 adjusts an output time with respect to a difference between the estimated output time obtained by the above expression and a time obtained by adding delay corresponding to the search time limit to an actual symbol input time. Thus, the output-time generation unit 123 generates an output time of data.

$$\text{Next symbol output time} = \text{Estimated output time} + \text{Difference adjustment value}$$

$$\text{Difference adjustment value} = \max\{\text{difference} \times B, \min(C, \text{difference})\}$$

$$\text{Difference} = (\text{Current symbol input time} + \text{Time limit in synthesis unit} - \text{Estimated output time})$$

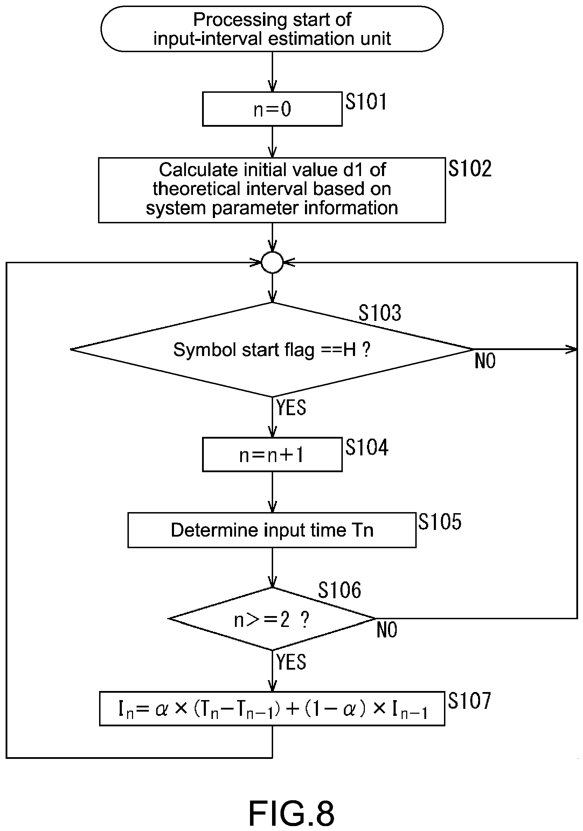

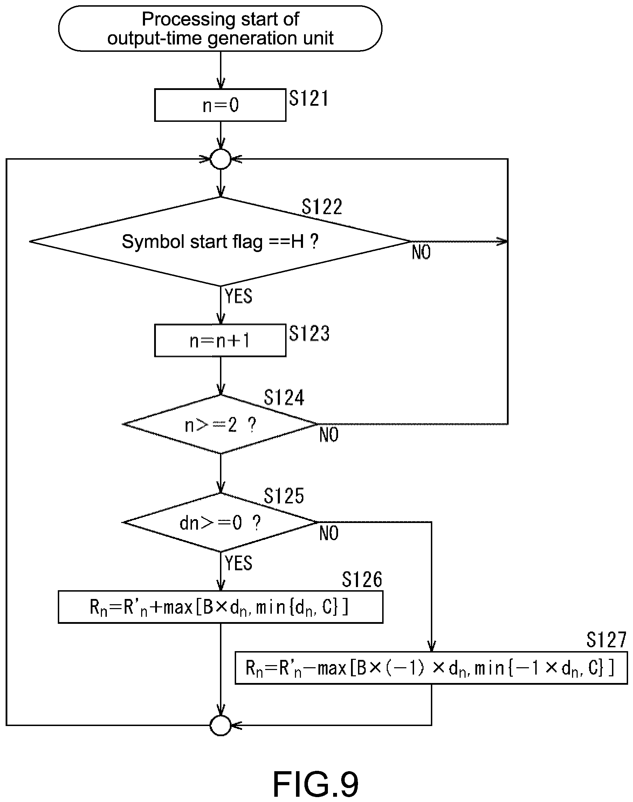

B and C are correction factors that can be arbitrarily selected and are factors that satisfy B (< 0) and C (> 0). Detailed processing of the smoothing unit 101, which makes the output intervals of the synthesis symbol constant by adjusting an output time through the computation as described above, will be described later with reference to the flowcharts of Figs. 8 and 9.

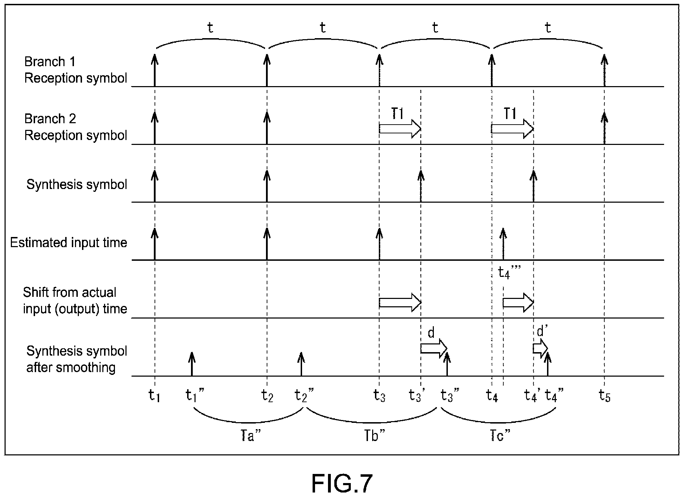

Fig. 7 is a diagram for describing adjustment of the output intervals of the synthesis symbol by the smoothing unit 101. The first part, second part, and third part shown in Fig. 7 are the same as the first part, second part, and third part shown in Fig. 4, and represent an acquisition time of a reception symbol of a branch 1, an acquisition time of a reception symbol of a branch 2, and an output time of a synthesis symbol from the synthesis unit 13, respectively. Further, those acquisition times and the output time are the same as those of Fig. 4.

As described with reference to Fig. 4, in the case where the reception symbol of the branch 2 delays or disappears, there is a possibility that the output time of the synthesis symbol delays and the output interval of the synthesis symbol is changed steeply. In order to prevent such a steep change from occurring, first, an estimated input time is set as shown in the fourth part of Fig. 7.

The estimated input time is a time estimated as a time at which the synthesis symbol is input from the synthesis unit 13 to the smoothing unit 101, and is a time estimated by the input-interval estimation unit 122. Further, the estimated input time is a time determined at the estimated input interval described above, and has a relationship in which a time obtained by adding the estimated input interval to the previous estimated input time is the current estimated input time.

Further, in the case where a reception status is good and the reception symbols are acquired in a regular cycle, that is, in the case where the synthesis symbol is output in a regular cycle, the estimated input interval has a regular cycle, and thus the estimated input time also has a regular cycle.

At time t1 and time t2, the reception sensitivity is good, and thus the reception symbols of the branch 1 and the branch 2 are respectively received, and the synthesis symbol is output. In such a case, the estimated input time (estimated input interval) is assumed to have a regular cycle, and in the example shown in Fig. 7, to be a cycle with an interval t.

In the status at the time t1 and the time t2, the synthesis symbol can be output at the time t1 and the time t2, but depending on the processing of the smoothing unit 101, the synthesis symbol is output from the smoothing unit 101 at time t1" and time t2" and then supplied to the error correction unit 14.

The time t1" is a time obtained by adding a predetermined time period to the time t1. The predetermined time period can be the time period T1 that is set as the search time limit. Namely, in this case, the synthesis symbol is output from the smoothing unit 101 to the error correction unit 14 at the time t1", at which the time period T1 has elapsed from the time t1.

Similarly, the time t2" is a time obtained by adding a predetermined time period to the time t2. The predetermined time period can be the time period T1 that is set as the search time limit. Namely, in this case, the synthesis symbol is output from the smoothing unit 101 to the error correction unit 14 at the time t2", at which the time period T1 has elapsed from the time t2.

It is assumed that a time difference between the time t1' and the time t2' is an interval Ta". The interval Ta" is the same time period as the interval t.

In such a manner, when the synthesis symbol can be output periodically, the output time of the synthesis symbol is previously shifted (delayed) by the search time limit so as to correspond to a case where the output of the synthesis symbol from the synthesis unit 13 is delayed.

At time t3, the reception symbol of the branch 2 delays or disappears, and the output time of the synthesis symbol from the synthesis unit 13 delays. As shown in the fifth part of Fig. 7, in the case where an actual input time is shifted from the estimated input time, the output time of the synthesis symbol from the smoothing unit 101 is also shifted.

In the example shown in Fig. 7, the synthesis symbol is output at time t3". In the case where the output time of the synthesis symbol is shifted by the time period T1 as the search time limit, the synthesis symbol is output at time t3'. A time slightly delayed from the time t3' is assumed as the time t3". A time difference between the time t3' and the time t3" is described as a change amount d, and the change amount d is assumed as a delay amount obtained by multiplying a difference from the input time by a factor.

As described above, by the processing of the smoothing unit 101, the synthesis symbol is controlled so as to be output at a time delayed by the time period T1 from the estimated input time. Therefore, if the synthesis symbol is output at the time t3', a time difference between the time t2" and the time t3' is the interval t and is the same interval as the interval Ta".

In such a manner, when delay is previously provided by the time period T1 and the synthesis symbol is output, if the synthesis symbol is output at the time t3', the output interval of the synthesis symbol can be made constant. However, there is a possibility that delay occurs at the time t3 and later, and when a delay amount is accumulated, even the time period T1 previously delayed cannot absorb the accumulated amount. In this regard, the synthesis symbol is output at the time t3", which is delayed by the change amount d.

It is assumed that a time period between the time t2" and the time t3" is an interval Tb". The interval Tb" is as follows.

$$\text{Interval Tb" = Interval t + Change amount d}$$

In such a manner, in the case where the change amount d is calculated, the next estimated input time is a time shifted by the predetermined time period. The calculation of the predetermined time period and the like will be described later with reference to the flowchart of Fig. 9. Since the estimated input time at the time t3 is the time t3, a time obtained by adding the interval t to the time t3 is time t4. The time t4 is not set as the next estimated input time. Time t4"' shifted by the predetermined time period is set as the next estimated input time.

A value obtained by multiplying a difference between the time t4"' and time t4' by a predetermined factor is assumed as a change amount d. To distinguish from the change amount d described above, this change amount d is described as a change amount d'. In this case, a relationship between the change amount d and the change amount d' is as follows: change amount d > change amount d'. Such a change amount d' is added to the time t4', and the added time 4" is assumed as the output time of the synthesis symbol after the smoothing.

It is assumed that a time period between the time t3" and the time t4" is an interval Tc". The interval Tc" is as follows: interval Tc" = interval t + change amount d'. The change amount d and the change amount d' have the following relationship: change amount d > change amount d', and thus the interval Tb" and the interval Tc" also satisfy the following relationship: interval Tb" > interval Tc".

In such a manner, in the case where delay occurs, smoothing processing is performed such that the output interval of the synthesis symbol does not change to a large extent, and an output timing is controlled such that the delay generally converges.

<Processing of Smoothing Unit>

Processing of the smoothing unit 101 in the case of performing such smoothing processing will be described with reference to the flowcharts of Figs. 8 and 9.

Fig. 8 is a flowchart for describing processing of the input-interval estimation unit 122. In Step S101, n is set to be 0. It is assumed that n is the number of symbol start flags input to the input-interval estimation unit 122, that is, the number of synthesis symbols input from the synthesis unit 13 to the smoothing unit 101.

In Step S102, an initial value d1 of a theoretical interval is calculated based on system parameter information. The system parameter information is information such as FFT size and can be obtained from a demodulation result of the demodulation unit 12 (Fig. 5). The initial value d1 of the theoretical interval is a value in which an interval corresponding to the interval t described with reference to Fig. 7 is estimated. Further, this initial value d1 is a value that is set as a transmission rate at the output start of the synthesis symbol of the smoothing unit 101.

In Step S103, it is determined whether the symbol start flag is H (High) or not. Until it is determined that the symbol start flag is on, the processing in Step S103 is repeated, and a standby state is maintained. When it is determined that the symbol start flag is on, the processing proceeds to Step S104.

In Step S104, update is made such that n=n+1. In Step S105, an input time Tn is determined. For example, the following configuration may be provided: a time at which the symbol start flag when n=1 is input is set to be 0, time count is started from that time point, and an input time Tn when n=n+1 is determined.

In Step S106, it is determined whether n is 2 or more. In Step S107, since a difference in input time Tn is calculated, two or more pieces of information on the input time are required. Therefore, in Step S106, it is determined whether n is 2 or more. When it is determined in Step S106 that n is not 2 or more, the processing is returned to Step S103 and the processing subsequent thereto is repeated.

On the other hand, when it is determined in Step S106 that n is 2 or more, the processing proceeds to Step S107. In Step S107, an estimated input interval is calculated. The estimated input interval represents an interval of the estimated input time in the description given with reference to Fig. 7, and is here described as an estimated input interval $In$. The estimated input interval $In$ is calculated by the following expression (1).

$$In = a \times (Tn - Tn{-}1) + (1 - a) \times In{-}1 \quad (1)$$

In the expression (1), a denotes a factor and has a value of 1 or less. $Tn$ denotes an input time during processing. $Tn{-}1$ denotes an input time at one time point before the input time during processing. Further, $In{-}1$ denotes an estimated input interval at a time point before the input time during processing.

By such an expression (1), the estimated input interval is calculated. In the description with reference to Fig. 7, the estimated input interval corresponds to the interval of the estimated input time shown in the fourth part thereof. Here, with reference to Fig. 7 again, the expression (1) will be described.

For example, in Fig. 7, the time t1 and the time t2 are substituted in the expression (1), and the factor a is set to be 0.3.

$$In = 0.3 \times (time\ t2 - time\ t1) + (1 - 0.3) \times interval\ t$$

Since (time t2 - time t1) is the interval t in Fig. 7, and thus the above expression is changed as follows.

$$In = 0.3 \times interval\ t + 0.7 \times interval\ t$$

Therefore, $In$ becomes the interval t. In this case, the interval t does not change as it is. Therefore, the time t3 at which the interval t has elapsed from the time t2 is set as the next estimated input time.

Similarly, in Fig. 7, the case on the time t2 and the time t3' is considered.

$$In = 0.3 \times (time\ t3' - time\ t2) + (1 - 0.3) \times interval\ t$$

Since (time t3' - time t2) is (interval t + time period T1) in Fig. 7, the above expression is changed as follows.

$$In = 0.3 \times (interval\ t + time\ period\ T1) + 0.7 \times interval\ t$$

Therefore, the following expression is obtained: $In = interval\ t + 0.3 \times time\ period\ T1$. Namely, the estimated input interval is changed to an interval longer than the interval t.

In such a manner, in the case where the input interval of the synthesis symbol input to the smoothing unit 101 is changed to a different interval, the estimated input interval is also changed. Such processing is repeatedly performed by the input-interval estimation unit 122. Further, when such processing is executed by the input-interval estimation unit 122, information on the estimated input interval $In$ and the input time $Tn$ are supplied from the input-interval estimation unit 122 to the output-time generation unit 123.

Next, with reference to the flowchart of Fig. 9, the processing of the output-time generation unit 123 will be described.

In Step S121, n is set to be 0. It is assumed that n is the number of symbol start flags input to the output-time generation unit 123, that is, the number of synthesis symbols input to the smoothing unit 101.

In Step S122, it is determined whether the symbol start flag is H (High) or not. Until it is determined that the symbol start flag is on, the processing in Step S122 is repeated, and a standby state is maintained. When it is determined that the symbol start flag is on, the processing proceeds to Step S123.

In Step S123, update is made such that n=n+1. In Step S124, it is determined whether n is 2 or more. When it is determined in Step S124 that n is not 2 or more, the processing is returned to Step S122 and the processing subsequent thereto is repeated.

On the other hand, when it is determined in Step S124 that n is 2 or more, the processing proceeds to Step S125. In Step S125, it is determined whether dn is 0 or more. dn denotes a difference. The difference dn is calculated by the following expression (2).

$$\text{Difference} = (\text{Current symbol input time} + \text{Time limit in synthesis unit} - \text{Estimated output time}) \quad (2)$$

When the current symbol input time is denoted by Tn, the time limit in synthesis unit is denoted by X, and the estimated output time is denoted by R'n, the expression (2) can be expressed as follows.

$$dn = Tn + X - R'n \quad (2)$$

In the expression (2), the time limit in synthesis unit X corresponds to the search time limit T1 described above. In the expression (2), the estimated output time R'n is calculated by the following expression (3).

$$\text{Estimated output time} = \text{Last symbol output time} + \text{Estimated input interval} \quad (3)$$

In the expression (3), the estimated input interval is a value supplied from the input-interval estimation unit 122 and corresponds to the estimated input interval In calculated by the above expression (1). When the expression (3) is expressed by symbols, the following expression is obtained.

$$R'n = Rn-1 + In \quad (3)$$

In the expression (3), Rn-1 denotes an output time at one time point before. In denotes an estimated input interval calculated by the input-interval estimation unit 122.

In Step S125, when it is determined that the difference dn is 0 or more, the processing proceeds to Step S126. In Step S126, an output time is calculated by the following expression (4).

$$Rn = R'n + \max[B \times dn, \min\{dn, C\}] \quad (4)$$

In the expression (4), Rn denotes a calculated output time, R'n denotes a value calculated by the following expression (5), and max[B×dn, min{dn,C}] denotes a difference adjustment value. Further, B and C are correction factors and are values that respectively satisfy B < 0 and C > 0. B and C can be arbitrarily selected. Further, B is appropriately described as a smoothing factor B, and C as a clip factor C.

From max[B×dn, min{dn,C}] as a difference adjustment value of the expression (4), first, a smaller value of any of the difference dn and the clip factor C is calculated. Of the calculated value and a value obtained by multiplying the smoothing factor B by the difference dn, a larger value is calculated, and that value is set as a difference adjustment value.

When the estimated output time R'n is added to the difference adjustment value, an output time Rn is calculated. In such a manner, in Step S126, when the values are substituted in the expression (4), the output time Rn is calculated.

On the other hand, in Step S125, when it is determined that the difference dn is not 0 or more, that is, the difference dn is a negative value, the processing proceeds to Step S127. In Step S127, an output time is calculated based on the following expression (6).

$$Rn = R'n - \max[-B \times dn, \min\{-dn, C\}] \quad (5)$$

Rn, R'n, B, dn, and C of the expression (5) are the same as those in the expression (4).

From max[-B×dn, min{-dn,C}] as a difference adjustment value of the expression (5), first, a smaller value of any of the negative difference dn and the clip factor C is calculated. Of the calculated value and a value obtained by multiplying the negative smoothing factor B by the difference dn, a larger value is calculated, and that value is set as a difference adjustment value.

When the difference adjustment value is subtracted from the estimated output time R'n, an output time Rn is calculated. In such a manner, in Step S127, when the values are substituted in the expression (5), the output time Rn is calculated.

In such a manner, depending on whether the difference dn is a positive value or a negative value, the expression used to calculate the output time differs. The difference dn is a difference between an estimated input time of the synthesis symbol and an actual input time of the synthesis symbol. In the case where this value is positive, it represents that the input of the synthesis symbol is delayed, and in the case where this value is negative, it represents that the input of the synthesis symbol is made earlier than the estimated time.

In the case where the input of the synthesis symbol is delayed, the output timing of the synthesis symbol is controlled such that the output interval of the synthesis symbol to the error correction unit 14 is not elongated drastically. Further, in the case where the input of the synthesis symbol is made earlier, the output timing of the synthesis symbol is controlled such that the output interval of the synthesis symbol to the error correction unit 14 is not shortened drastically.

In such a manner, it is possible to control the transmission rate of the synthesis symbol supplied to the error correction unit 14 so as not to change drastically and so as to fall within a certain range of the transmission rate. Thus, it is possible to satisfy an RBM in a reception apparatus conforming to a DVB-T2 or DVB-C2 standard, for example.

Further, it is possible to suppress jitter of a transmission timing of the transport stream (TS) in the digital television demodulation. Further, it is possible to achieve high speed in processing of the error correction unit 14. Further, it is unnecessary to mount a buffer for holding the synthesis symbol in the error correction unit 14, and possible to ease restrictions for implementation.

It should be noted that the reception apparatus 100 including the two branches has been described as an example in the embodiment described above, but the present technology can also be applied to a reception apparatus 100 including two or more branches.

<Regarding Recording Medium>

A series of processing described above can be executed by hardware or software. In the case where the series of processing is executed by software, a program constituting the software is installed in a computer. Here, the computer includes a computer incorporated in dedicated hardware, a general-purpose personal computer that can execute various functions by installing various programs therein, and the like.

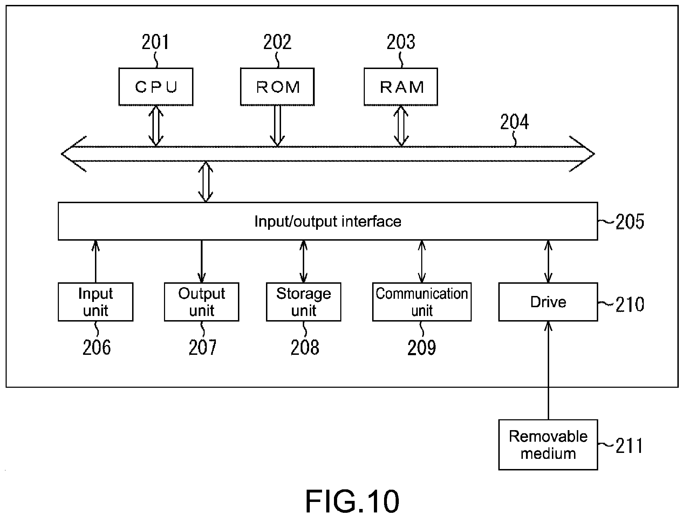

Fig. 10 is a block diagram showing an example of a hardware configuration of a computer that executes the above-mentioned series of processing by the program. In the computer, a CPU (Central Processing Unit) 201, a ROM (Read Only Memory) 202, and a RAM (Random Access Memory) 203 are connected to one another via a bus 204. Additionally, an input/output interface 205 is connected to the bus 204. An input unit 206, an output unit 207, a storage unit 208, a communication unit 209, and a drive 210 are connected to the input/output interface 205.

The input unit 206 is constituted of a keyboard, a mouse, a microphone, and the like. The output unit 207 is constituted of a display, a speaker, and the like. The storage unit 208 is constituted of a hard disk, a nonvolatile memory, and the like. The communication unit 209 is constituted of a network interface and the like. The drive 210 drives a removable medium 211 such as a magnetic disc, an optical disc, a magneto-optical disc, or a semiconductor memory.

In the computer configured as described above, the series of processing described above is performed, for example, when the CPU 201 loads a program stored in the storage unit 208 to the RAM 203 via the input/output interface 205 and the bus 204 and then executes the program.

The program executed by the computer (CPU 201) can be provided by being recorded on the removable medium 211 as a package medium, for example. Further, the program can be provided via a wired or wireless transmission medium such as a local area network, the Internet, and digital satellite broadcasting.

In the computer, the program can be installed in the storage unit 208 via the input/output interface 205 by mounting the removable medium 211 to the drive 210. Further, the program can be received in the communication unit 209 via a wired or wireless transmission medium and installed in the storage unit 208. In addition, the program can be previously installed in the ROM 202 or the storage unit 208.

It should be noted that the program executed by the computer may be a program that is processed chronologically along the described order in this specification or may be a program that is processed in parallel or at a necessary timing such as when an invocation is performed.

Further, in this specification, the system represents the whole of the apparatus constituted of a plurality of apparatuses.

It should be noted that the effects described in this specification are merely exemplary ones and are not restrictive ones, and any other effects may be produced.

Description of Symbols

| | |
|---|---|
| 10 | reception apparatus |
| 11 | antenna |
| 12 | demodulation unit |
| 13 | synthesis unit |
| 14 | error correction unit |
| 101 | smoothing unit |
| 121 | buffer unit |
| 122 | input-interval estimation unit |
| 123 | output-time generation unit |

**Claims**

1. A reception apparatus (10), comprising:

   a plurality of demodulation units (12) each associated with a respective antenna of a plurality of antennas (11), wherein each demodulation unit demodulates a signal supplied by its respective antenna and generates a symbol;
   a synthesis unit (13) that synthesizes the symbols demodulated in the plurality of demodulation units (12) and generates a synthesis symbol;
   an error correction unit (14) that performs error correction of the synthesis symbol; and
   a smoothing unit (101) that controls a transmission rate of the synthesis symbol from the synthesis unit (13) to the error correction unit (14) to fall within a certain range, wherein
   the smoothing unit (101) includes

   a buffer unit (121) that holds the synthesis symbol from the synthesis unit (13),
   an input-time estimation unit (122) that estimates a time at which the synthesis symbol is input from the synthesis unit (13) to the smoothing unit (101), wherein the input-time estimation unit (122) sets a transmission rate at an output start of the synthesis symbol to the error correction unit (14) by a parameter supplied from the demodulation unit (12), and
   an output-time generation unit (123) that generates a time at which the synthesis symbol held in the buffer unit (121) is output to the error correction unit (14), wherein the output-time generation unit (123) generates a time at which the synthesis symbol is output by using an estimated input interval that is estimated by the input-time estimation unit (122), the estimated input time at which the synthesis symbol is input, and a set predetermined time period.

2. The reception apparatus (10) according to claim 1, wherein
   the set predetermined time period is set after arrival of a first reception symbol, as a search range for a second reception symbol.

3. The reception apparatus (10) according to claim 1, wherein
   the demodulation units (12) and the error correction unit (14) demodulate and perform error correction on a signal of a second-generation European terrestrial digital broadcasting standard (DVB-T2).

4. The reception apparatus (10) according to claim 1, wherein
   the demodulation units (12) and the error correction unit (14) demodulate and perform error correction on a signal of a second-generation European cable digital broadcasting standard (DVB-C2).

5. A reception method for a reception apparatus including
   a plurality of demodulation units each associated with a respective antenna of a plurality of antennas, wherein each demodulation unit demodulates a signal supplied by its respective antenna and generates a symbol,
   a synthesis unit that synthesizes the symbols demodulated in the plurality of demodulation units and generates a synthesis symbol, and
   an error correction unit that performs error correction of the synthesis symbol,

the reception method comprising the step of controlling a transmission rate of the synthesis symbol from the synthesis unit to the error correction unit to fall within a certain range by a smoothing unit included in the reception apparatus including

a buffer unit that holds the synthesis symbol from the synthesis unit,
an input-time estimation unit that estimates a time at which the synthesis symbol is input from the synthesis unit to the smoothing unit, wherein the input-time estimation unit sets a transmission rate at an output start of the synthesis symbol to the error correction unit by a parameter supplied from the demodulation unit, and
an output-time generation unit that generates a time at which the synthesis symbol held in the buffer unit is output to the error correction unit, wherein the output-time generation unit generates a time at which the synthesis symbol is output by using an estimated input interval that is estimated by the input-time estimation unit, the estimated input time at which the synthesis symbol is input, and a set predetermined time period.

6. A computer-readable program causing a computer to execute processing, the computer controlling a reception apparatus including
a plurality of demodulation units each associated with a respective antenna of a plurality of antennas, wherein each demodulation unit demodulates a signal supplied by its respective antenna and generates a symbol,
a synthesis unit that synthesizes the symbols demodulated in the plurality of demodulation units and generates a synthesis symbol, and
an error correction unit that performs error correction of the synthesis symbol,
the processing comprising the step of controlling a transmission rate of the synthesis symbol from the synthesis unit to the error correction unit to fall within a certain range by a smoothing unit included in the reception apparatus including

a buffer unit that holds the synthesis symbol from the synthesis unit,
an input-time estimation unit that estimates a time at which the synthesis symbol is input from the synthesis unit to the smoothing unit, wherein the input-time estimation unit sets a transmission rate at an output start of the synthesis symbol to the error correction unit by a parameter supplied from the demodulation unit, and
an output-time generation unit that generates a time at which the synthesis symbol held in the buffer unit is output to the error correction unit, wherein the output-time generation unit generates a time at which the synthesis symbol is output by using an estimated input interval that is estimated by the input-time estimation unit, the estimated input time at which the synthesis symbol is input, and a set predetermined time period.

**Patentansprüche**

1. Empfangsvorrichtung (10), die Folgendes umfasst:

mehrere Demodulationseinheiten (12), die jeweils einer jeweiligen Antenne von mehreren Antennen (11) zugeordnet sind, wobei jede Demodulationseinheit ein Signal demoduliert, das durch ihre jeweilige Antenne zugeführt wird, und ein Symbol erzeugt;
eine Syntheseeinheit (13), die die Symbole synthetisiert, die in den mehreren Demodulationseinheiten (12) demoduliert werden, und ein Synthesesymbol erzeugt;
eine Fehlerkorrektureinheit (14), die eine Fehlerkorrektur des Synthesesymbols durchführt; und
eine Glättungseinheit (101), die eine Übertragungsgeschwindigkeit des Synthesesymbols von der Syntheseeinheit (13) an die Fehlerkorrektureinheit (14) derart steuert, dass sie in einen bestimmten Bereich fällt, wobei die Glättungseinheit (101) Folgendes enthält:

eine Puffereinheit (121), die das Synthesesymbol von der Syntheseeinheit (13) hält,
eine Eingabezeit-Schätzeinheit (122), die eine Zeit schätzt, zu der das Synthesesymbol von der Syntheseeinheit (13) an die Glättungseinheit (101) eingegeben wird,
wobei die Eingabezeit-Schätzeinheit (122) eine Übertragungsgeschwindigkeit an einem Ausgabebeginn des Synthesesymbols an die Fehlerkorrektureinheit (14) durch einen Parameter einstellt, der von der Demodulationseinheit (12) zugeführt wird, und
eine Ausgabezeit-Erzeugungseinheit (123), die eine Zeit erzeugt, zu der das Synthesesymbol, das in der Puffereinheit (121) gehalten wird, an die Fehlerkorrektureinheit (14) ausgegeben wird, wobei die Ausgabezeit-Erzeugungseinheit (123) unter Verwendung eines geschätzten Eingabeintervalls, das durch die Eingabezeit-Schätzeinheit (122) geschätzt wird, der geschätzten Eingabezeit, zu der das Synthesesymbol eingegeben wird, und eines eingestellten, vorgegebenen Zeitraums eine Zeit erzeugt, zu der das Synthesesymbol ausgegeben wird.

2. Empfangsvorrichtung (10) nach Anspruch 1, wobei
der eingestellte, vorgegebene Zeitraum nach dem Eintreffen eines ersten Empfangssymbols als ein Suchbereich für ein zweites Empfangssymbol eingestellt wird.

3. Empfangsvorrichtung (10) nach Anspruch 1, wobei
die Demodulationseinheiten (12) und die Fehlerkorrektureinheit (14) auf einem Signal einer europäischen terrestrischen digitalen Sendenorm der zweiten Generation (DVB-T2) demodulieren und eine Fehlerkorrektur durchführen.

4. Empfangsvorrichtung (10) nach Anspruch 1, wobei
die Demodulationseinheiten (12) und die Fehlerkorrektureinheit (14) auf einem Signal einer europäischen kabelgebundenen digitalen Sendenorm der zweiten Generation (DVB-C2) demodulieren und eine Fehlerkorrektur durchführen.

5. Empfangsverfahren für eine Empfangsvorrichtung, die Folgendes enthält:

mehrere Demodulationseinheiten, die jeweils einer jeweiligen Antenne von mehreren Antennen zugeordnet sind, wobei jede Demodulationseinheit ein Signal demoduliert, das durch ihre jeweilige Antenne zugeführt wird, und ein Symbol erzeugt,
eine Syntheseeinheit, die die Symbole synthetisiert, die in den mehreren Demodulationseinheiten demoduliert werden, und ein Synthesesymbol erzeugt, und
eine Fehlerkorrektureinheit, die eine Fehlerkorrektur des Synthesesymbols durchführt,
wobei das Empfangsverfahren den Schritt des Steuerns einer Übertragungsgeschwindigkeit des Synthesesymbols von der Syntheseeinheit an die Fehlerkorrektureinheit derart, dass sie in einen bestimmten Bereich fällt, durch eine Glättungseinheit umfasst, die in der Empfangsvorrichtung enthalten ist, wobei sie Folgendes enthält:

eine Puffereinheit, die das Synthesesymbol von der Syntheseeinheit hält,
eine Eingabezeit-Schätzeinheit, die eine Zeit schätzt, zu der das Synthesesymbol von der Syntheseeinheit in die Glättungseinheit eingegeben wird, wobei die Eingabezeit-Schätzeinheit eine Übertragungsgeschwindigkeit an einem Ausgabebeginn des Synthesesymbols an die Fehlerkorrektureinheit durch einen Parameter einstellt, der von der Demodulationseinheit zugeführt wird, und
eine Ausgabezeit-Erzeugungseinheit, die eine Zeit erzeugt, zu der das Synthesesymbol, das in der Puffereinheit gehalten wird, an die Fehlerkorrektureinheit ausgegeben wird, wobei die Ausgabezeit-Erzeugungseinheit unter Verwendung eines geschätzten Eingabeintervalls, das durch die Eingabezeit-Schätzeinheit geschätzt wird, der geschätzten Eingabezeit, zu der das Synthesesymbol eingegeben wird, und eines eingestellten, vorgegebenen Zeitraums eine Zeit erzeugt, zu der das Synthesesymbol ausgegeben wird.

6. Computerlesbares Programm, das bewirkt, dass ein Computer eine Verarbeitung ausführt, wobei der Computer eine Empfangsvorrichtung steuert, die Folgendes enthält:

mehrere Demodulationseinheiten, die jeweils einer jeweiligen Antenne von mehreren Antennen zugeordnet sind, wobei jede Demodulationseinheit ein Signal demoduliert, das durch ihre jeweilige Antenne zugeführt wird, und ein Symbol erzeugt,
eine Syntheseeinheit, die die Symbole synthetisiert, die in den mehreren Demodulationseinheiten demoduliert werden, und ein Synthesesymbol erzeugt, und
eine Fehlerkorrektureinheit, die eine Fehlerkorrektur des Synthesesymbols durchführt,
wobei die Verarbeitung den Schritt des Steuerns einer Übertragungsgeschwindigkeit des Synthesesymbols von der Syntheseeinheit an die Fehlerkorrektureinheit derart, dass sie in einen bestimmten Bereich fällt, durch eine Glättungseinheit umfasst, die in der Empfangsvorrichtung enthalten ist, wobei sie Folgendes enthält:

eine Puffereinheit, die das Synthesesymbol von der Syntheseeinheit hält,
eine Eingabezeit-Schätzeinheit, die eine Zeit schätzt, zu der das Synthesesymbol von der Syntheseeinheit in die Glättungseinheit eingegeben wird, wobei die Eingabezeit-Schätzeinheit eine Übertragungsgeschwindigkeit an einem Ausgabebeginn des Synthesesymbols an die Fehlerkorrektureinheit durch einen Parameter einstellt, der von der Demodulationseinheit zugeführt wird, und
eine Ausgabezeit-Erzeugungseinheit, die eine Zeit erzeugt, zu der das Synthesesymbol, das in der Puffereinheit gehalten wird, an die Fehlerkorrektureinheit ausgegeben wird, wobei die Ausgabezeit-Erzeugungseinheit unter Verwendung eines geschätzten Eingabeintervalls, das durch die Eingabezeit-Schätzeinheit geschätzt wird, der geschätzten Eingabezeit, zu der das Synthesesymbol eingegeben wird, und eines eingestellten, vorgegebenen Zeitraums eine Zeit erzeugt, zu der das Synthesesymbol ausgegeben wird.

**Revendications**

1. Appareil (10) de réception, comportant :

   une pluralité d'unités (12) de démodulation dont chacune est associée à une antenne respective d'une pluralité d'antennes (11), chaque unité de démodulation démodulant un signal fourni par son antenne respective et générant un symbole ;
   une unité (13) de synthèse qui synthétise les symboles démodulés dans la pluralité d'unités (12) de démodulation et génère un symbole de synthèse ;
   une unité (14) de correction d'erreurs qui effectue une correction d'erreurs du symbole de synthèse ; et
   une unité (101) de lissage qui commande un débit de transmission du symbole de synthèse de l'unité (13) de synthèse à l'unité (14) de correction d'erreurs pour qu'il se situe à l'intérieur d'une certaine plage,
   l'unité (101) de lissage comprenant

   une unité (121) de tampon qui conserve le symbole de synthèse provenant de l'unité (13) de synthèse,
   une unité (122) d'estimation d'instant d'entrée qui estime un instant auquel le symbole de synthèse est introduit de l'unité (13) de synthèse à l'unité (101) de lissage, l'unité (122) d'estimation d'instant d'entrée réglant un débit de transmission à un début de sortie du symbole de synthèse vers l'unité (14) de correction d'erreurs par un paramètre fourni à partir de l'unité de démodulation (12), et
   une unité (123) de génération d'instant de sortie qui génère un instant auquel le symbole de synthèse conservé dans l'unité (121) de tampon est délivré à l'unité (14) de correction d'erreurs, l'unité (123) de génération d'instant de sortie générant un instant auquel le symbole de synthèse est délivré en utilisant un intervalle d'entrée estimé qui est estimé par l'unité (122) d'estimation d'instant d'entrée, l'instant d'entrée estimé auquel le symbole de synthèse est introduit, et un laps de temps prédéterminé spécifié.

2. Appareil (10) de réception selon la revendication 1,
   le laps de temps prédéterminé spécifié étant spécifié après l'arrivée d'un premier symbole de réception, en tant que plage de recherche d'un deuxième symbole de réception.

3. Appareil (10) de réception selon la revendication 1,
   les unités (12) de démodulation et l'unité (14) de correction d'erreurs démodulant et effectuant une correction d'erreurs sur un signal d'une norme européenne de diffusion numérique terrestre de deuxième génération (DVB-T2).

4. Appareil (10) de réception selon la revendication 1,
   les unités (12) de démodulation et l'unité (14) de correction d'erreurs démodulant et effectuant une correction d'erreurs sur un signal d'une norme européenne de diffusion numérique par câble de deuxième génération (DVB-C2).

5. Procédé de réception pour un appareil de réception comprenant
   une pluralité d'unités de démodulation dont chacune est associée à une antenne respective d'une pluralité d'antennes, chaque unité de démodulation démodulant un signal fourni par son antenne respective et générant un symbole,
   une unité de synthèse qui synthétise les symboles démodulés dans la pluralité d'unités de démodulation et génère un symbole de synthèse, et
   une unité de correction d'erreurs qui effectue une correction d'erreurs du symbole de synthèse,
   le procédé de réception comportant l'étape consistant à faire commander un débit de transmission du symbole de synthèse de l'unité de synthèse à l'unité de correction d'erreurs, pour qu'il se situe à l'intérieur d'une certaine plage, par une unité de lissage comprise dans l'appareil de réception, comprenant

   une unité de tampon qui conserve le symbole de synthèse provenant de l'unité de synthèse,
   une unité d'estimation d'instant d'entrée qui estime un instant auquel le symbole de synthèse est introduit de l'unité de synthèse à l'unité de lissage, l'unité d'estimation d'instant d'entrée réglant un débit de transmission à un début de sortie du symbole de synthèse vers l'unité de correction d'erreurs par un paramètre fourni à partir de l'unité de démodulation, et

une unité de génération d'instant de sortie qui génère un instant auquel le symbole de synthèse conservé dans l'unité de tampon est délivré à l'unité de correction d'erreurs, l'unité de génération d'instant de sortie générant un instant auquel le symbole de synthèse est délivré en utilisant un intervalle d'entrée estimé qui est estimé par l'unité d'estimation d'instant d'entrée, l'instant d'entrée estimé auquel le symbole de synthèse est introduit, et un laps de temps prédéterminé spécifié.

6. Programme lisible par ordinateur amenant un ordinateur à exécuter un traitement, l'ordinateur commandant un appareil de réception comprenant une pluralité d'unités de démodulation dont chacune est associée à une antenne respective d'une pluralité d'antennes, chaque unité de démodulation démodulant un signal fourni par son antenne respective et générant un symbole,
une unité de synthèse qui synthétise les symboles démodulés dans la pluralité d'unités de démodulation et génère un symbole de synthèse, et
une unité de correction d'erreurs qui effectue une correction d'erreurs du symbole de synthèse,
le traitement comportant l'étape consistant à faire commander un débit de transmission du symbole de synthèse de l'unité de synthèse à l'unité de correction d'erreurs, pour qu'il se situe à l'intérieur d'une certaine plage, par une unité de lissage comprise dans l'appareil de réception comprenant

une unité de tampon qui conserve le symbole de synthèse de l'unité de synthèse,
une unité d'estimation d'instant d'entrée qui estime un instant auquel le symbole de synthèse est introduit à partir de l'unité de synthèse à l'unité de lissage, l'unité d'estimation d'instant d'entrée réglant un débit de transmission à un début de sortie du symbole de synthèse vers l'unité de correction d'erreurs par un paramètre fourni à partir de l'unité de démodulation, et
une unité de génération d'instant de sortie qui génère un instant auquel le symbole de synthèse conservé dans l'unité de tampon est délivré à l'unité de correction d'erreurs, l'unité de génération d'instant de sortie générant un instant auquel le symbole de synthèse est délivré en utilisant un intervalle d'entrée estimé qui est estimé par l'unité d'estimation d'instant d'entrée, l'instant d'entrée estimé auquel le symbole de synthèse est introduit, et un laps de temps prédéterminé spécifié.

FIG.1

FIG.2

FIG.3

FIG.4

FIG.5

FIG.6

FIG.7

Processing start of
input-interval estimation unit

n=0     S101

Calculate initial value d1 of
theoretical interval based on
system parameter information    S102

Symbol start flag ==H ?    S103    NO

YES

n=n+1    S104

Determine input time Tn    S105

n>=2 ?    S106    NO

YES

$$I_n = \alpha \times (T_n - T_{n-1}) + (1 - \alpha) \times I_{n-1}$$    S107

FIG.8

Processing start of
output-time generation unit

n=0    S121

S122

Symbol start flag ==H ?    NO

YES

n=n+1    S123

S124

n>=2 ?    NO

S125

dn>=0 ?    NO

YES

S126

$R_n = R'_n + \max[B \times d_n, \min\{d_n, C\}]$

S127

$R_n = R'_n - \max[B \times (-1) \times d_n, \min\{-1 \times d_n, C\}]$

FIG.9

FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013135270 A
- EP 1772982 A1
- US 2013117624 A1
- JP 2005333455 A
- US 2009044074 A1